# EUROPÄISCHE PATENTANMELDUNG

(11) **EP 3 393 013 A1**
(43) Veröffentlichungstag der Anmeldung: **24.10.2018**
(21) Anmeldenummer: 17167586.1
(22) Anmeldetag: 21.04.2017
(51) Int. Cl.: H02K 5/16, H02K 5/22, H02K 7/10, H02K 11/21

(54) **KOPPLUNG MODULARER BESTANDTEILE EINER ELEKTRISCHEN MASCHINE**

(71) Anmelder: Siemens Aktiengesellschaft, 80333 München (DE)
(72) Erfinder: Schneider, Helmut, 97688 Bad Kissingen (DE)

(57) **Zusammenfassung**

Die Erfindung betrifft eine Baureihe von elektrischen Maschinen (1), wobei die Maschinen jeweils wenigstens einen Stator (4) und wenigstens einen Rotor (5) umfassen, wobei wenigstens zwei Bestandteile einer jeden Maschine modular ausgeführt und über wenigstens eine definierte Schnittstelle (S34, S36, S45, S67, S68) miteinander verbunden sind. Dadurch wird ein Baukasten ermöglicht, der wenigstens eine Baureihe von elektrischen Maschinen (1) umfasst, und eine Fertigung der elektrischen Maschine (1) beschleunigt und günstig ermöglicht.

## Beschreibung

Die Erfindung betrifft eine Baureihe von elektrischen Maschinen, wobei die Maschinen jeweils wenigstens einen Stator und wenigstens einen Rotor umfassen, sowie einen Baukasten, der wenigstens eine Baureihe von elektrischen Maschinen umfasst.

Bisher werden Baureihen von elektrischen Maschinen, insbesondere von Servomotoren - im Folgenden auch als Produkte bezeichnet - für verschiedene Marktsegmente einzeln und unabhängig voneinander definiert und somit als unterschiedliche Produkte entwickelt. Da die Entwicklung der einzelnen Maschinen einer Baureihe meist nacheinander stattfindet, führt dies zu sich unterscheidenden Produkten, bei welchen Synergieeffekte nicht genutzt werden können. Nur ganz wenige oder sogar gar keine Gleichteile können in verschiedenen Baureihen verwendet werden. Zudem weichen Fertigungsmittel - z. B. in Form unterschiedlicher Bohrungsdurchmesser in den Baureihen - und Fertigungstechnologien - z. B. in Form unterschiedlicher Designs der Läufer-Permanentmagnete - voneinander ab. Aufgrund dieser Unterschiede sind die zu produzierenden Stückzahlen der Elektromotoren zu gering, um in eine automatisierte Fertigung zu investieren. Ferner können Kostenpotentiale nicht gehoben werden, da angesichts geringer Stückzahlen kein Mengeneffekt wirksam wird. Kurze und deshalb günstige Fertigungszeiten sind zudem nur bei identischen und automatisierten Fertigungsprozessen möglich. Dies führt zu teuren Produkten, die nicht im Wettbewerb bestehen können.

Der Erfindung liegt die Aufgabe zugrunde, ein Produktdesign für Elektromotoren zu erstellen, das eine Reduzierung der Komplexität in der Produktion unter Beibehaltung einer hohen Varianz an Produktausprägungen ermöglicht.

Die Lösung der gestellten Aufgabe gelingt durch eine Baureihe von elektrischen Maschinen, wobei die Maschinen jeweils wenigstens einen Stator und wenigstens einen Rotor umfassen, wobei wenigstens zwei Bestandteile einer jeden Maschine modular ausgeführt und über wenigstens eine definierte Schnittstelle miteinander verbunden sind.

Eine Baureihe beschreibt eine bestimmte Anzahl eines Produktes - hier: eine elektrische Maschine, vorzugsweise in Form einer permanenterregten Synchronmaschine, die als Motor, insbesondere als Servomotor, ausgeführt ist - in bestimmter Ausführung, wobei das Produkt auch in anderen Ausführungen produziert wird. Bei elektrischen Maschinen können sich die Ausführungen beispielsweise im Hinblick auf Drehzahl, Drehmomentwelligkeit und Leistung unterscheiden.

Die Erfindung ist neben permanenterregten Synchronmaschinen auch bei anderen Maschinenarten wie z. B. Asynchronmaschinen anwendbar.

Erfindungsgemäß umfasst ein Produkt wenigstens ein, vorzugsweise aber mehrere Module. Die Module umfassen wenigstens eine, vorzugsweise aber mehrere Komponenten. Beispielhaft an einem Servomotor erläutert bedeutet dies: Das Produkt ist ein Servomotor, ein Modul ist beispielsweise ein Rotor des Servomotors und eine Komponente ist ein Permanentmagnet, der Teil des Rotors einer permanenterregten Synchronmaschine ist.

Die Baureihe einer elektrischen Maschine umfasst eine bestimmte Anzahl von elektrischen Maschinen. Ein erster Typ der elektrischen Maschine erreicht beispielsweise eine hohe Drehzahl und ist daher teuer, ein zweiter Typ eine niedrige Drehzahl und ist daher günstig. Erfindungsgemäß ist ein Aktivteil der elektrischen Maschine - Stator und Rotor - modular ausgeführt. Eine erste Ausführungsform des Aktivteils kann eine hohe Drehzahl bewerkstelligen, eine zweite Ausführungsform nur eine niedrige Drehzahl. Die Erfindung ermöglicht eine Variation der beiden Ausführungsformen des Aktivteils und ermöglicht die Fertigung des ersten Typs der elektrischen Maschine sowie des zweiten Typs innerhalb der Baureihe. Die definierte Schnittstelle ermöglicht einen vereinfachten Austausch des Aktivteils, da vorzugsweise beide Ausführungsformen die gleiche oder eine ähnliche definierte Schnittstelle aufweisen, die mit einer Schnittstelle an einem Gehäuse, an welches das Aktivteil vorzugsweise angebunden ist, kompatibel ausgeführt ist.

Der Servomotor umfasst wenigstens einen Stator sowie wenigstens einen Rotor. Diese beiden Bestandteile sind gemäß einer beispielhaften Ausführungsform der Erfindung modular ausgeführt und über wenigstens eine definierte Schnittstelle miteinander verbunden.

In einer bevorzugten Ausführungsform umfasst ein Servomotor zudem wenigstens ein Gehäuse, welches vorzugsweise an seiner axialen Stirnseite wenigstens einen Flansch aufweist, den Stator und den Rotor umgibt und drehfest mit dem Stator verbunden ist, zudem wenigstens einen Lagerschild mit optionaler Bremse, welcher vorzugsweise drehfest mit dem Gehäuse verbunden ist, zudem vorzugsweise wenigstens einen Geber, welche vorzugsweise mit dem Lagerschild verbunden ist und zudem wenigstens einen Anschluss, welcher vorzugsweise drehfest mit dem Lagerschild verbunden ist.

In einer alternativen Ausführungsform kann der Servomotor auch ohne Gehäuse ausgeführt sein. Zudem muss die Bremse nicht beim Lagerschild ausgeführt sein, sondern kann auch in oder auf einem Gehäuse ausgeführt sein. Eine Ausführung der Bremse auf dem Gehäuse eignet sich besonders gut, wenn zwei oder mehr Anschlüsse benötigt werden. Der Geber ist nicht obligatorisch, weshalb auch eine Ausführungsform der elektrischen Maschine ohne Geber möglich ist.

Vorteilhaft wird die elektrische Maschine in Module aufgeteilt. Zwischen den einzelnen Modulen finden sich definierte Schnittstellen. Diese Schnittstellen werden vorzugsweise verbindlich festgelegt und nicht geändert. Jedoch können die Schnittstellen weiterentwickelt werden, solange eine Abwärtskompatibilität gewährleistet ist. Die Schnittstellen umfassen insbesondere mechanische Schnittstellen und/oder elektrische Schnittstellen.

Somit kann ein Baukasten bzw. ein modulares Baukastensystem für Elektromotoren für einen Aufbau eines Servomotors, welcher die bereits erläuterten Module umfasst, eingerichtet werden. Der Baukasten lebt von den einheitlichen mechanischen Schnittstellen und dient einer Komplexitätsreduktion. Enthalten sind insbesondere Bausteine, welche als Module, Bauteile oder Baugruppen ausgeführt und mittels Schnittstellen mit anderen Bausteinen verbunden den Aufbau einer elektrischen Maschine, insbesondere eines Servomotors, bewerkstelligen. Eine Definition sowie eine Standardisierung von Schnittstellen ermöglicht eine vielfältige Kombination unterschiedlicher Bausteine. Durch die Variationen der Bausteine können Motoren geschaffen werden, die den Anforderungen eines jeden Gebiets entsprechen. Hierbei stehen folgende Motoreigenschaften im Vordergrund: Leistung, Drehmomentwelligkeit und Performance.

Durch Verwendung eines Moduls in mehreren Produkten lassen sich Kommunalitäten, d. h. Gleichheiten oder Ähnlichkeiten von Komponenten oder Teilen, in Form einer Gleichteile-Nutzung gezielt schaffen. Zudem wird durch einen gleich gestalteten Aufbau von Motoren verschiedener Eigenschaften eine automatisierte Fertigung ermöglicht, welche Fertigungszeiten deutlich verkürzt und somit Kosten einspart. Von Vorteil sind hierbei standardisierte Fertigungstechnologien sowie standardisierte Fertigungsmittel, sodass eine Komplexität des Aufbaus von Motoren möglichst gering gehalten wird und sich die Motoren vorzugsweise einzig in einer Ausführung ihrer Module unterscheiden.

In einer bevorzugten Ausführungsform ist ein Aktivteil des Servomotors - also der Stator und der Rotor - variabel ausgeführt. Somit kann der Motor bezüglich seiner Leistung, Performance und Drehmomentwelligkeit an eventuelle Anforderungen angepasst werden. Eine geringe Drehmomentwelligkeit wird mitunter für Motoren gefordert, welche an der Herstellung hochwertiger Teile beteiligt sind. Als Beispiel kann hierbei ein Motor angeführt werden, der für ein Bearbeiten eines Werkstücks in einer Werkzeugmaschine eingesetzt wird. Ist die Drehmomentwelligkeit gering, was sich in einem höheren Preis des Motors niederschlägt, wird beispielsweise eine glatte Oberfläche des Werkstücks erreicht. Eine höhere Drehmomentwelligkeit, die insbesondere bei günstigen Motoren aufzufinden ist, kann sich mit einer welligen Oberfläche bemerkbar machen. Die Drehmomentwelligkeit eines Servomotors kann beispielsweise durch eine geschrägte Anordnung von Permanentmagneten, die sich auf einer Oberfläche des Rotors befinden, optimiert werden.

In der bevorzugten Ausführungsform ist auch ein Lagerschild an der B-Seite zumindest bezüglich seiner Länge variabel gestaltet. Hierbei sind vorzugsweise zwei Versionen möglich: Eine Ausführung mit einer Bremse sowie eine Ausführung ohne eine Bremse. Die Bremse verändert den Lagerschild bzgl. seiner Länge. Vorzugsweise befindet sich am Lagerschild ein Anschluss. Der Anschluss dient mitunter einer Anbindung einer elektrischen Energieversorgung und/oder eines Kommunikationsmoduls. Jedoch sind auch zwei oder mehr Anschlüsse möglich.

Andere Bestandteile des Motors, insbesondere das Gehäuse mit Flansch an der A-Seite, der Geber sowie eine Welle, können ebenso variiert werden. Ist die geforderte Leistung der elektrischen Maschine höher, nimmt insbesondere die Größe des Rotors zu, weshalb das Gehäuse angepasst wird.

Wird eine Funktionalität eines Produkts geändert, wird die Anpassung am jeweiligen Modul, nicht aber an der Schnittstelle durchgeführt. Dies bietet den Vorteil, dass durch eine Anpassung von einzelnen Modulen für verschiedene Produkte eine Varianz nicht mehr im gesamten Produkt, sondern nur noch in einzelnen Modulen wirkt und somit leichter beherrscht werden kann. Die Entwicklung und Produktion werden dadurch vereinfacht.

Vorteilhaft ist eine definierte Schnittstelle am Modul selbst ausgeführt und folgendermaßen aufgebaut: Ein erstes Modul verfügt über wenigstens ein Merkmal A, welches durch Anbindung eines Merkmals B an einem zweiten Modul zu einer Verbindung führt.

Die Anbindung kann auf unterschiedliche Weise bewerkstelligt werden.

Beispielsweise kann hierbei eine Schraubverbindung angewendet werden, bei welcher das Merkmal A des ersten Moduls als ein Innengewinde ausgeführt ist und das Merkmal B des zweiten Moduls als Außengewinde ausgeführt ist. Die Verbindung wird durch eine Zusammenfügung - vorzugsweise wird das Außengewinde in das Innengewinde gedreht - der beiden Gewinde erreicht.

Eine weitere beispielhafte Ausführungsform ist eine Klemmverbindung vorzugsweise unter Verwendung eines ringförmigen Elements, insbesondere eines O-Rings. Um das Merkmal A des ersten Moduls wird ein O-Ring gelegt. Das Merkmal B des zweiten Moduls ist so gestaltet, dass durch Quetschung des O-Rings eine vorzugsweise formschlüssige Verbindung der Module entsteht.

Zudem kann die Anbindung auch mittels eines Bajonettverschlusses bewerkstelligt werden. Die Merkmale A und B werden durch Ineinanderstecken und entgegengesetztes Drehen verbunden und so auch wieder getrennt.

Zudem ist auch eine Anbindung mittels Schnappverbindung möglich. Hierbei ist wenigstens ein Merkmal eines Moduls als elastisches Fügeteil ausgeführt. Durch Verhaken mit dem anderen Merkmal entsteht eine formschlüssige Verbindung. Diese kann je nach Anwendung lösbar oder unlösbar sein.

Merkmal A des ersten Moduls und Merkmal B des zweiten Moduls können ferner durch eine Steckverbindung zusammengefügt werden. Die Merkmale A und B werden hierbei formschlüssig passend ausgestaltet, durch vorzugsweise Federkraft kraftschlüssig lösbar fixiert und vorzugsweise durch Verschrauben zusätzlich gegen unbeabsichtigtes Lösen gesichert.

Zudem besteht die Möglichkeit, die beiden Module mittels eines weiteren Bauteils, beispielsweise mittels einer Schraube, miteinander zu verbinden.

Merkmal A des ersten Moduls und Merkmal B des zweiten Moduls können zudem durch eine Schweißverbindung zusammengefügt werden.

Die Erfindung bietet den Vorteil, dass bei einer Entwicklung von elektrischen Maschinen, die auf einer modularen Architektur basieren, Gleichteile in verschiedenen Baureihen eingesetzt werden können. Die benötigten Stückzahlen können dadurch bedeutend erhöht und Stückkosten gesenkt werden. Eine Standardisierung der Schnittstellen führt zu einer Standardisierung von Fertigungsprozessen, wodurch eine automatisierte Fertigung ermöglicht wird. Auch dies wirkt sich positiv auf entstehende Kosten aus. Da Änderungen einer Funktionalität einer elektrischen Maschine mittels Austauschen wenigstens eines Moduls bewerkstelligt werden, vergünstigt sich aufgrund einfacher Handhabe zudem eine Weiterentwicklung der Maschine. Eine benötigte Varianz der elektrischen Maschinen wird in den Modulen abgebildet.

Da die elektrische Maschine aus Modulen aufgebaut wird, sind diese modularen Bestandteile der elektrischen Maschine vorteilhaft in einem Baukasten verfügbar. Der Baukasten umfasst vorzugsweise wenigstens die Teile für eine Baureihe von elektrischen Maschinen, d. h. wenigstens einen Stator und wenigstens einen Rotor, vorzugsweise wenigstens ein Gehäuse, welches vorzugsweise an seiner axialen Stirnseite wenigstens einen Flansch aufweist, vorzugsweise den Stator und den Rotor umgibt und vorzugsweise drehfest mit dem Stator verbunden ist, zudem wenigstens einen Lagerschild mit optionaler Bremse, welcher vorzugsweise drehfest mit dem Gehäuse verbunden ist, zudem vorzugsweise wenigstens einen Geber, welcher vorzugsweise drehfest mit dem Lagerschild verbunden ist und zudem wenigstens einen Anschluss, welcher vorzugsweise drehfest mit dem Lagerschild verbunden ist. Da eine elektrische Maschine auch ohne Gehäuse und/oder ohne Geber ausgeführt sein kann, sind diese keine zwingenden Bestandteile des Baukastens.

Im Folgenden wird die Erfindung anhand der in den Figuren dargestellten Ausführungsbeispiele näher beschrieben und erläutert.
- FIG 1: zeigt eine Ausgestaltung einer Baureihe einer elektrischen Maschine.
- FIG 2: zeigt eine Ausgestaltung einer definierten Schnitt stelle.

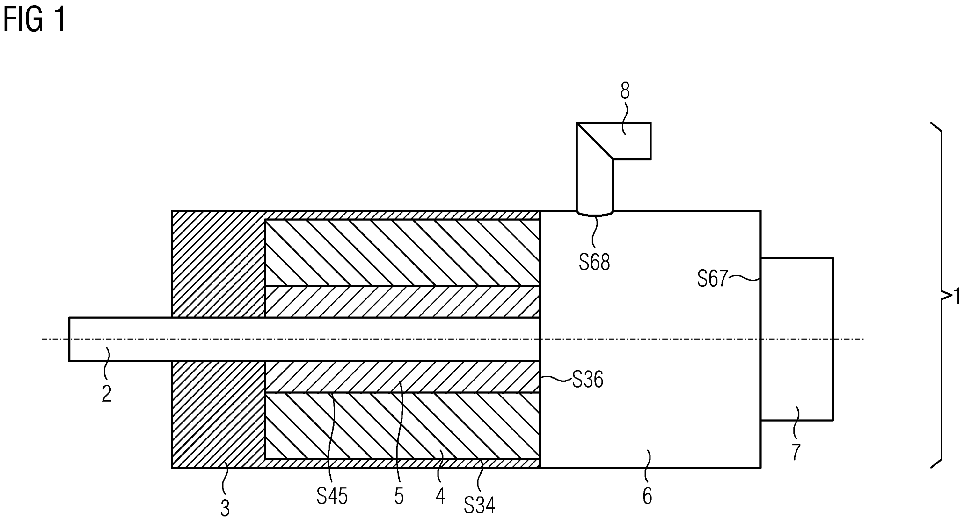

- FIG 1: zeigt eine Ausgestaltung einer Baureihe einer elektrischen Maschine 1 mit einer Welle 2. Die elektrische Maschine 1 ist vorzugsweise als perma nenterregte Synchronmaschine in Form eines Servomo tors ausgeführt.

Die elektrische Maschine 1 umfasst ein Gehäuse mit Flansch 3 an einer A-Seite. Dieses umgibt vorzugsweise wenigstens einen Stator 4 und wenigstens einen Rotor 5. Weder der Stator 4 noch der Rotor 5 müssen in dieser Ausführungsform aus einem Stück gefertigt sein. Diese können auch aus wenigstens zwei Statormodulen zu einem Stator bzw. aus wenigstens zwei Rotormodulen zu einem Rotor zusammengefügt sein. Zudem umfasst die elektrische Maschine 1 einen Lagerschild 6 an einer B-Seite. Dieser kann mit einer optionalen Bremse ausgeführt sein. Auf der B-Seite ist zudem ein Geber mit Motordeckel 7 ausgeführt. Am Lagerschild 6 ist ein Anschluss 8 ausgeführt. Die erläuterten Bestandteile des Servomotors sind als Module ausgeführt.

In einer bevorzugten Ausführungsform sind der Rotor 5 und der Stator 4 des Servomotors variabel ausgeführt. Somit kann der Motor bezüglich seiner Leistung, Performance und Drehmomentwelligkeit an eventuelle Anforderungen angepasst werden.

In der bevorzugten Ausführungsform ist auch der Lagerschild 6 an der B-Seite zumindest bezüglich seiner Länge variabel gestaltet. Hierbei sind vorzugsweise zwei Versionen möglich, eine Ausführung mit einer Bremse sowie eine Ausführung ohne eine Bremse, welche die Länge des Lagerschilds 6 verändert. Vorzugsweise befindet sich am Lagerschild ein Anschluss 8. Jedoch sind auch zwei oder mehr Anschlüsse möglich.

Andere Bestandteile des Motors, insbesondere das Gehäuse mit Flansch an der A-Seite, der Geber sowie eine Welle, können ebenso variiert werden. Ist die geforderte Leistung der elektrischen Maschine höher, nimmt insbesondere die Größe des Rotors zu, weshalb das Gehäuse angepasst wird.

Die beschriebenen Module sind über definierte Schnittstellen miteinander verbunden. Vorteilhaft befindet sich zwischen den folgenden Modulen wenigstens eine definierte Schnittstelle:
∘ Gehäuse mit Flansch 3 und Stator 4 (Bezugszeichen S34 in FIG 1),
∘ Stator 4 und Rotor 5 (Bezugszeichen S45 in FIG 1),
∘ Gehäuse mit Flansch 3, welches Stator 4 und Rotor 5 beinhaltet, und Lagerschild 6 (Bezugszeichen S36),
∘ Lagerschild 6 und Anschluss 8 (Bezugszeichen S68),
∘ Lagerschild 6 und Geber mit Motordeckel 7 (Bezugszeichen S67).

Die definierten Schnittstellen ermöglichen, dass ein erstes Gehäuse mit Flansch 3 oder ein davon verschiedenes zweites Gehäuse mit Flansch mit wenigstens einem ersten Aktivteil - Stator 4 und Rotor 5 - oder einem davon verschiedenen zweiten Aktivteil und mit wenigstens einem ersten Lagerschild 6 oder einem davon verschiedenen zweiten Lagerschild verbindbar ist. Wird eine Funktionalität eines Produkts geändert, wird die Anpassung am jeweiligen Modul, nicht aber an der Schnittstelle durchgeführt. Dies bietet den Vorteil, dass durch eine Anpassung von einzelnen Modulen für verschiedene Produkte eine Varianz nicht mehr im gesamten Produkt, sondern nur noch in einzelnen Modulen wirkt und somit leichter beherrscht werden kann.

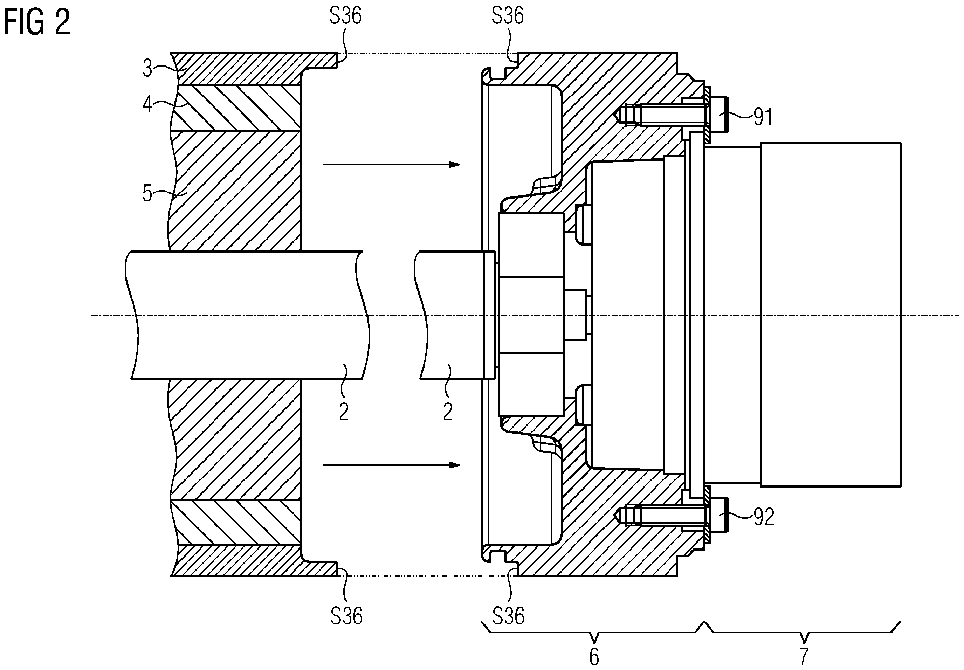

FIG 2 zeigt eine definierte Schnittstelle S36. Die definierte Schnittstelle S36 ist am Modul - in der Figur am Lagerschild 6 und am Gehäuse mit Flansch 3, welches Stator 4 und Rotor 5 umgibt, selbst ausgeführt. Der Lagerschild 6 weist ein Merkmal A der Schnittstelle S36 auf, welches durch Anbindung eines Merkmals B der Schnittstelle S36 am Gehäuse 3 zu einer Verbindung führt.

Diese beispielhafte Ausführungsform der Anbindung ist als eine Klemmverbindung vorzugsweise unter Verwendung eines ringförmigen Elements, insbesondere eines O-Rings, ausgeführt. Um das Merkmal A wird ein O-Ring gelegt. Das Merkmal A weist vorzugsweise eine Aussparung auf, in welche der O-Ring eingebracht werden kann. Das Merkmal B ist so gestaltet, dass durch Quetschung des O-Rings eine vorzugsweise formschlüssige Verbindung der Module entsteht. In der beispielhaften Ausführungsform wird das Merkmal B am Gehäuse 3 auf das Merkmal A am Lagerschild 6 geschoben. Dies ist in der Figur durch Pfeile gekennzeichnet. Die in der Figur gezeigten Stücke einer Welle 2 sind vorzugsweise als eine durchgängige Welle ausgeführt.

Zudem besteht die Möglichkeit, zwei Module mittels eines weiteren Bauteils, beispielsweise mittels einer Schraube, miteinander zu verbinden. Der Geber 7 ist in der Figur durch die Schrauben 91 und 92 mit dem Lagerschild 6 verbunden.

In einer weiteren Ausführungsform kann eine Kombination aus Klemm- und Schraubverbindung eingesetzt werden. Vorzugsweise mittels eines O-Rings wie bereits oben erläutert werden die Merkmale A und B miteinander verklemmt und zusätzlich mit wenigstens einer Schraube verbunden.

## Patentansprüche

1. Baureihe von elektrischen Maschinen (1), wobei die Maschinen jeweils
o wenigstens einen Stator (4) und
o wenigstens einen Rotor (5) umfassen,
**dadurch gekennzeichnet, dass** wenigstens zwei Bestandteile einer jeden Maschine (1) modular ausgeführt und über wenigstens eine definierte Schnittstelle (S34, S36, S45, S67, S68) miteinander verbunden sind.

2. Baureihe nach Anspruch 1, wobei die elektrischen Maschinen (1) als permanenterregte Synchronmaschinen, vorzugsweise als Servomotoren, ausgeführt sind.

3. Baureihe nach einem der Ansprüche 1 oder 2, wobei die Maschinen (1) jeweils folgende modular ausgeführten Bestandteile umfassen, die jeweils über eine definierte Schnittstelle (S34, S36, S45, S67, S68) miteinander verbunden sind:
∘ Wenigstens ein Gehäuse (3), welches vorzugsweise an seiner axialen Stirnseite wenigstens einen Flansch aufweist, vorzugsweise den Stator und den Rotor umgibt und vorzugsweise drehfest mit dem Stator verbunden ist,
∘ wenigstens einen Lagerschild mit optionaler Bremse (6), welcher vorzugsweise drehfest mit dem Gehäuse verbunden ist,
∘ wenigstens einen Geber (7), welcher vorzugsweise drehfest mit dem Lagerschild verbunden ist und
∘ wenigstens einen Anschluss (8), welcher vorzugsweise drehfest mit dem Lagerschild verbunden ist.

4. Baureihe nach einem der Ansprüche 1 bis 3, wobei die definierte Schnittstelle am Modul selbst ausgeführt ist.

5. Baukasten, wobei der Baukasten wenigstens eine Baureihe von elektrischen Maschinen (1) nach einem der vorhergehenden Ansprüche umfasst.

6. Elektrische Maschine für eine Baureihe nach einem der Ansprüche 1 bis 4, die wenigstens einen Stator, wenigstens einen Rotor und wenigstens eine Schnittstelle umfasst.

7. Elektrische Maschine nach Anspruch 6, die wenigstens ein Gehäuse umfasst.
